(19) **Europäisches Patentamt / European Patent Office / Office européen des brevets**

(11) **EP 3 946 138 B1**

(12) **FASCICULE DE BREVET EUROPEEN**

(45) Date de publication et mention
de la délivrance du brevet:
**21.06.2023 Bulletin 2023/25**

(21) Numéro de dépôt: **20719124.8**

(22) Date de dépôt: **30.03.2020**

(51) Classification Internationale des Brevets (IPC):
**A61C 1/14** *(2006.01)* **A61C 19/04** *(2006.01)*
**A61C 1/18** *(2006.01)*

(52) Classification Coopérative des Brevets (CPC):
**A61C 1/186; A61C 1/141; A61C 1/144;** A61C 1/142

(86) Numéro de dépôt international:
**PCT/EP2020/058987**

(87) Numéro de publication internationale:
**WO 2020/201224 (08.10.2020 Gazette 2020/41)**

(54) **DISPOSITIF DE COUPLAGE SÉLECTIF POUR UNE PINCE DE SERRAGE**

VORRICHTUNG ZUR SELEKTIVEN KUPPLUNG FÜR EINE SPANNZANGE

SELECTIVE COUPLING DEVICE FOR A TIGHTENING CLAMP

(84) Etats contractants désignés:
**AL AT BE BG CH CY CZ DE DK EE ES FI FR GB
GR HR HU IE IS IT LI LT LU LV MC MK MT NL NO
PL PT RO RS SE SI SK SM TR**

(30) Priorité: **29.03.2019 EP 19166221**

(43) Date de publication de la demande:
**09.02.2022 Bulletin 2022/06**

(73) Titulaire: **Bien-Air Holding SA
2504 Bienne (CH)**

(72) Inventeurs:
• **SARCHI, Davide
8008 Zürich (CH)**
• **MOSIMANN, Myriam
2504 Bienne (CH)**

• **GATEAU, Yann
2504 Bienne (CH)**

(74) Mandataire: **BOVARD AG
Patent- und Markenanwälte
Optingenstrasse 16
3013 Bern (CH)**

(56) Documents cités:
EP-A1- 1 716 817          EP-A2- 2 327 370
WO-A1-2006/130989     WO-A1-2008/034980
DE-A1- 1 552 233          DE-A1- 4 324 493
DE-C- 811 250               FR-A1- 2 557 220
US-A- 3 321 209            US-A- 4 378 212
US-A1- 2014 154 642

## Description

Domaine technique de l'invention

La présente invention se rapporte au domaine des turbines et des contre-angles, plus particulièrement aux dispositifs de serrage d'un outil de fraisage.

Etat de la technique

La plupart des pièces-à-main dentaires à haute vitesse du marché, c'est-à-dire les turbines (alimentées en air) et les contre-angles multiplicateurs (alimentés par des moteurs électriques) sont équipés d'un système de serrage de la fraise basé sur l'utilisation d'une pince élastique. Ce système est bien connu depuis très longtemps, notamment de la solution décrite dans le document de brevet EP0273259B1.

Dans des systèmes de serrage de ce type, l'arbre du rotor (sur lequel et à l'extérieur duquel on chasse soit la turbine, dans le cas d'une turbine à air, soit le pignon de transmission, dans le cas d'un contre-angle) entraînant l'outil de fraisage en rotation contient une pince et un poussoir. La pince est généralement chassée et/ou soudée dans l'arbre, et elle possède deux fonctions: celle de retenir axialement la fraise, grâce à des extrémités élastiques flexibles, et celle de guider la fraise radialement, pour éviter que, en présence de la charge radiale appliquée par le dentiste pendant le fraisage, la fraise soit excessivement inclinée et puisse générer des vibrations excessives nuisibles à la précision du travail. Le poussoir est quant à lui partiellement libre dans l'arbre parce qu'il peut glisser axialement dans l'arbre et dans certains cas tourner angulairement dans l'arbre (dans le cas d'un poussoir conique); il coopère avec la pince dans la phase d'ouverture de la pince pour libérer la fraise lorsque le chirurgien-dentiste appuie sur le bouton de desserrage qui recouvre le poussoir. Quand la pince est fermée et retient la fraise, le poussoir peut être en appui simple sur une surface de la pince mais il ne doit jamais exercer une force d'ouverture sur les parties élastiques de la pince.

Afin d'empêcher que, lors du fraisage et à cause d'une charge axiale excessive appliquée par le chirurgien-dentiste sur la fraise, la fraise puisse glisser au-delà des mâchoires de la pince vers le couvercle et coincer le poussoir, rendant ainsi impossible à l'utilisateur de pousser le poussoir à travers la pression appliquée sur le couvercle et ouvrir la pince pour extraire la fraise à la fin du travail, il existe par ailleurs des systèmes de serrage perfectionnés comprenant un composant additionnel auquel on se réfère comme étant un arrêt de serrage. Un tel composant est introduit, de préférence chassé et/ou soudé dans l'arbre du côté du couvercle de la tête de la pièce-à-main, et il permet d'éviter tout blocage axial du poussoir. La présence de l'arrêt de serrage limite ainsi les retours du marché dus à une fraise restée bloquée dans le serrage.

Par ailleurs, afin de pouvoir optimiser les propriétés de guidage et de serrage de la pince, il existe par ailleurs des systèmes dans lesquels un canon de guidage est formé séparément de la pince; ces deux pièces étant ensuite solidarisées mutuellement en général par soudage ou brasage pour ne plus former plus qu'un seul bloc solidaire en rotation avec l'arbre du rotor. Dans un tel cas, un composant additionnel est alors inséré dans l'arbre, à proximité de la sortie de la fraise. Une telle solution permet d'utiliser des matériaux dissociés qui soient les plus adaptés à la fois pour la pince, nécessitant des matériaux flexibles et élastiques pour venir clipser l'extrémité arrière de la fraise, et pour le canon de guidage, nécessitant quant à lui plutôt des matériaux durs et inusables.

Néanmoins, aucune de ces solutions de l'état de la technique ne permet d'éviter efficacement une usure prématurée de la pince, due à la désolidarisation entre la fraise et la pince pendant une rotation sous charge, c'est-à-dire lorsque celle-ci est en train d'être utilisée par le chirurgien-dentiste. Le glissement répété et prolongé de la fraise à l'intérieur de la pince est peutêtre notamment dû au blocage instantané de la fraise impliquant, à cause de l'inertie non négligeable du rotor, le dépassement du couple maximum assuré par le serrage.

Le document US2014/154642 concerne par exemple un dispositif de serrage visant à améliorer le centrage de l'outil de fraisage grâce une bague de support coopérant avec le mécanisme de poussoir afin de libérer et insérer l'outil. Une telle bague est toutefois toujours solidaire du logement dans lequel elle est insérée, de même que la pince de serrage, qui est accouplée, selon un mode de réalisation préférentiel, via des ergots à une douille de guidage pourvue d'encoches de fixation, elle-même également solidaire en rotation de ce logement. Ainsi, plus particulièrement, une solidarisation angulaire est toujours assurée entre la pince et son logement.

Les contraintes opératoires qui y sont mentionnées en termes de force de retenue de l'outil de fraisage ne concernent ainsi que le mécanisme de serrage/desserrage du poussoir, mais pas celui de la solidarisation en rotation d'un arbre d'entraînement par rapport à la pince, que l'on cherche ici à conserver en permanence, même en cas de blocage de la fraise. Ainsi, aucun glissement de la fraise dans la pince ne peut être empêché ici non plus.

Le document EP1716817 concerne un ensemble de serrage modulaire comprenant une douille porteuse (« *Tragerhülse* ») dans laquelle sont insérés notamment une pince de serrage (« *Spannhülse* ») et un canon de guidage (« *Zwischenhülse* »). La pince et le canon sont montés solidaires en rotation d'un arbre d'entraînement (« *Innenlagerlagerhülse* »), lui-même solidaire du rotor, via cette douille. Néanmoins ici encore, puisque le canon de guidage est toujours solidaire en rotation vis-à-vis de la douille de logement, d'une part, et que la pince est également soudée à cette douille, il est impossible qu'un découplage en rotation ne puisse jamais se produire entre ces deux éléments. Au contraire, seule une désolidarisation de la douille vis-à-vis de l'arbre d'entraînement est prévue lors d'un remplacement de celle-ci.

Par ailleurs, comme la liaison entre la douille et l'arbre d'entraînement est réalisé notamment via un collage dans des rainures respectives aménagées à cet effet en plus d'un chassage, ici encore le blocage de la fraise s'accompagne indubitablement d'un glissement de celle-ci dans la pince en raison d'une force de retenue moins élevée que celle correspondant au seuil de décrochage de la douille vis-à-vis du reste du mécanisme d'entraînement - sinon il faudrait changer de douille à chaque blocage de la fraise!

Le document FR2557220A1 concerne un autre mécanisme de serrage de configuration classique où les mâchoires de serrage sont dissociées d'une douille de logement constituant un arbre d'entraînement pour en faire une pièce d'usure modulaire. Un mode de réalisation préférentiel pour cette invention consiste à encercler les mâchoires de serrage par une bague ressort montée autour de la douille, et ce afin de pouvoir ajuster finement l'effort de serrage. Néanmoins, comme dans la solution divulguée dans le document US2014/154642 discuté plus haut, les mâchoires de serrage sont toujours systématiquement solidaires en rotation de la douille lorsque cette dernière est elle-même entraînée en rotation.

Comme expliqué dans la description de ce document, cette solution vise à se dispenser d'éléments élastiques pour le serrage en remplaçant ceuxci par des pièces rigides et très dures afin diminuer leur usure et limiter leur remplacement. Ceci confirme que l'usure est, ici encore, toujours provoquée par le frottement entre l'outil de fraisage et les mâchoires en cas de blocage.

Le document DE4324493A1 divulgue sinon une autre solution dans laquelle une pince de serrage (« *Spannzange* »), ayant deux extrémités élastiques, est également agencée en tant que pièce séparée d'un canon de guidage. Celle-ci est ici montée sur une bague de maintien (« *Haltering* »), qui est elle-même fixée à un arbre d'entraînement (« *Antriebshülse* »).

Cette solution concerne toutefois un mécanisme de serrage et respectivement de libération de l'outil de fraisage via l'actionnement du poussoir inverse au mode de fonctionnement traditionnel, parce que le serrage de la fraise est dû à la déformation de la pince induite par un ressort actionnant vers le bouton-poussoir la douille de compression de la pince de serrage. Donc, la pince de serrage fixe la fraise quand la pince se trouve sous la pression exercée par la douille (vers le bouton poussoir) et par le canon (vers la fraise), tandis qu'elle libère la fraise quand ladite pince se trouve en absence de pression. Les seuils de couplage mutuels en rotation des différentes pièces du mécanisme d'entraînement de la fraise en fonctionnement ne sont pas évoqués mais cette construction impose quoiqu'il arrive que le couple de serrage de la pince sur la fraise soit toujours proportionnel au couple de serrage exercé par la douille et par le canon sur la pince. Il est donc impossible que la pince soit désolidarisée du canon pour un couple sensiblement inférieur au couple de désolidarisation entre la fraise et la pince. D'ailleurs, la force de serrage des mâchoires de la pince y est censée correspondre simplement à des valeurs habituelles, et aucune indication n'est fournie sinon sur des moyens de pallier les problèmes de glissement éventuel de la fraise dans la pince pouvant survenir lors d'un blocage non plus.

Il existe donc un besoin pour des solutions exemptes de ces limitations connues.

## Exposé sommaire de l'invention

Un but de la présente invention est ainsi de proposer un nouveau dispositif de serrage qui soit plus efficace et permette de minimiser les risques de désolidarisation en rotation entre la fraise et la pince.

Un autre objectif de la présente invention est de proposer un dispositif de serrage perfectionné qui reste néanmoins compatible avec des têtes de pièces à main standard, et qui ne rendent pas les opérations de montage du bouton-poussoir utilisé pour le desserrage plus complexe.

Ces buts sont atteints grâce aux caractéristiques de la revendication principale, et en particulier grâce au mécanisme de couplage angulaire sélectif entre la pince et le canon de guidage ou respectivement l'arbre d'entraînement directement, le mécanisme de couplage angulaire sélectif exerçant un couple de retenue angulaire entre la pince et le canon de guidage et/ou l'arbre d'entraînement dont la valeur est comprise entre 4mNm et 20mNm, laquelle étant adaptée pour être inférieure à celle correspondant au seuil de glissement entre la pince et l'outil de fraisage.

Un avantage de la solution proposée est qu'elle permet de minimiser les risques de désolidarisation entre la fraise et la pince, et ainsi d'améliorer considérablement la durée de vie du dispositif de serrage.

Parallèlement, la solution proposée permet d'améliorer la fiabilité du serrage tout en minimisant les composants additionnels à introduire dans la construction de la pièce-à-main, ni avoir d'influence sur les opérations de montage de cette dernière.

Selon un mode de réalisation préférentiel, le mécanisme de couplage angulaire sélectif utilise un couplage magnétique entre la pince et le canon de guidage, de telle sorte que la force d'attraction magnétique entre ces deux pièces permet parallèlement de positionner et maintenir axialement les pièces en contact mutuel sans nécessiter de pièces additionnelles. Selon une variante préférée, un anneau aimanté est surmonté et solidarisé au canon de guidage en tant que pièce modulaire, afin de pouvoir choisir plus librement le matériau du canon de guidage lui-même, et ainsi ne pas porter préjudice aux propriétés de guidage conférées.

Selon un autre mode de réalisation préférentiel, le mécanisme de couplage angulaire sélectif utilise un couplage par friction via une bague de serrage radial solidaire en rotation de l'arbre d'entraînement, tout comme le canon de guidage, et qui serait montée sur une partie inférieure de la pince via un serrage gras, c'est-à-dire un ajustement n'exerçant pas un couple de retenue trop important pour permettre un mouvement relatif entre ces deux pièces au-delà de l'exercice d'un couple en torsion allant au-delà d'un certain seuil tombant dans des plages de fonctionnement usuelles. Dans ce cas, les surfaces de friction sont de préférence radiales et cylindriques, et le couplage a lieu directement entre la pince et l'arbre d'entraînement. Par ailleurs, selon une variante préférée pour ce mode couplage purement mécanique, la forme de la pince peut présenter une collerette inférieure formant une surface de retenue axiale, ou encore un bourrelet périphérique dans une partie plus intermédiaire, lequel peut alors être recouvert d'une bague de serrage additionnelle remplissant aussi accessoirement la fonction de blocage axial, et augmentant sinon la surface de contact pour l'exercice d'un couple de friction, et par conséquent l'ajustement de la valeur du couple de retenue vis-à-vis de la pince.

Selon encore un autre mode de réalisation préférentiel, le poussoir est réalisé en deux parties, dont l'une est fixe en rotation par rapport à l'arbre d'entraînement et donc du canon de guidage, et l'autre, coopérant avec la pince, est montée totalement libre en rotation dans l'arbre d'entraînement. Une telle variante présente l'avantage que la pince puisse glisser longtemps sur le canon, lorsque ces deux pièces sont amenées à être désolidarisées, sans pour autant générer de risque d'ouverture du poussoir en raison de la torsion exercée sur les mâchoires, surtout lorsque ces dernières prennent la forme de deux pattes agencées de façon diamétralement opposée. Selon une variante particulièrement avantageuse, la partie inférieure du poussoir libre en rotation dans l'arbre est conique.

## Brève description des dessins

La présente invention sera mieux comprise à la lecture de la description qui va suivre, donnée à titre d'exemple et faite en référence aux dessins dans lesquels:

- la figure 1 est une vue de face de la tête d'une pièce-à-main pourvue d'un outil de fraisage selon un mode de réalisation préférentiel pour la présente invention;

- la figure 2 est une vue en coupe sagittale partielle, le long du plan de coupe (S-S) indiqué sur la figure 1, en trois dimensions d'une pièce-à-main utilisant un rotor de transmission pourvu d'une roue mobile de turbine, auquel on se réfère souvent plus simplement comme « rotor à turbine » pourvu d'un système de serrage avec couplage sélectif en rotation selon un mode de réalisation préféré pour la présente invention;

- la figure 3 montre une vue en coupe agrandie de la pièce-à-main de la figure 2 dans le plan sagittal (S-S);

- la figure 4 est une vue en coupe sagittale partielle en trois dimensions d'une pièce-à-main utilisant un rotor à turbine pourvu d'un système de serrage avec couplage sélectif en rotation selon un autre mode de réalisation préféré pour la présente invention;

- la figure 5 montre une vue en coupe agrandie de la pièce-à-main de la figure 5 dans le plan sagittal (S-S);

- la figure 6 est une vue en coupe sagittale partielle en trois dimensions d'une pièce-à-main de type contre-angle utilisant non plus de l'air comprimé mais un actionnement via un arbre moteur, et qui est pourvu d'un rotor de transmission équipé d'un système de serrage avec couplage sélectif en rotation selon encore un autre mode de réalisation préféré pour la présente invention;

- la figure 7 montre une vue en coupe agrandie de la pièce-à-main de la figure 8 dans le plan sagittal;

- la figure 8 montre le détail d'un mécanisme de couplage sélectif purement mécanique selon un autre mode de réalisation préféré pour la présente invention, toujours selon une vue en coupe sagittale;

- la figure 9 montre le détail d'un mécanisme de couplage sélectif selon encore un autre mode de réalisation préféré pour la présente invention selon la même vue en coupe sagittale que la figure 8;

- la figure 10 montre le détail d'un mécanisme de couplage sélectif selon encore une autre variante préférée pour la présente invention selon la même vue en coupe sagittale que les figures 8 et 9.

## Description détaillée de l'invention

Dans le cadre de cette demande, la pièce-à-main dans laquelle est peut être intégré le mécanisme de serrage selon l'invention peut indifféremment consister en une « turbine », lorsque la fraise est entraînée en rotation sous l'action d'air comprimé injecté par le biais d'un conduit, ou en un « contre-angle» utilisant un arbre entraîneur actionné par un moteur, dit arbre moteur.

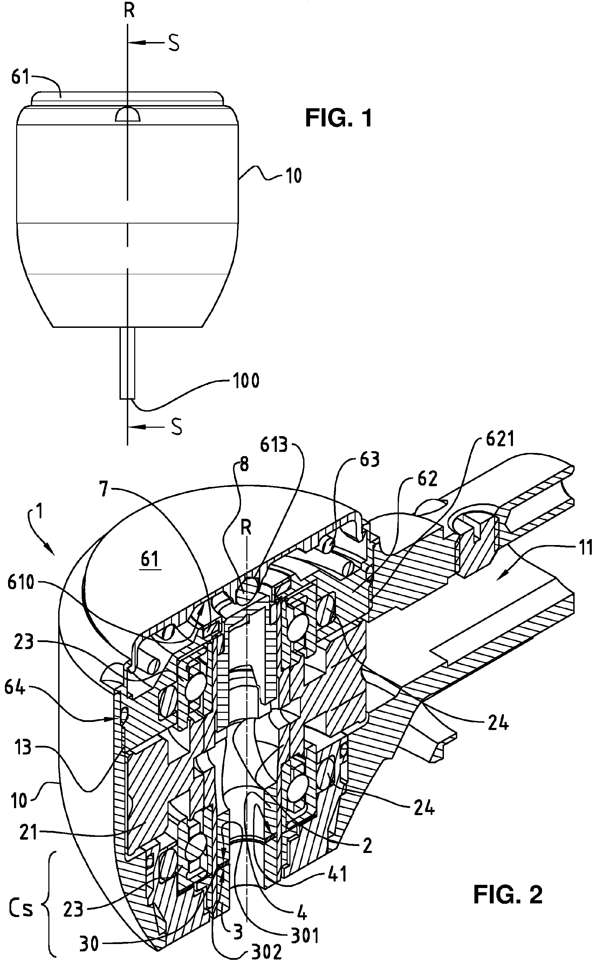

Une vue de l'extérieur d'une pièce-à-main 1, pouvant consister en une turbine ou un contre-angle, est précisément illustrée sur la figure 1. Elle comprend une tête 10 au bas de laquelle est insérée la fraise 100, montée rotative au tour de son axe de rotation R. Un bouton poussoir 61 recouvrant la tête 10 permet classiquement, lorsqu'une pression est exercée sur lui par l'utilisateur de la pièce à main, c'est-à-dire typiquement le chirurgien-dentiste, de libérer la fraise 100.

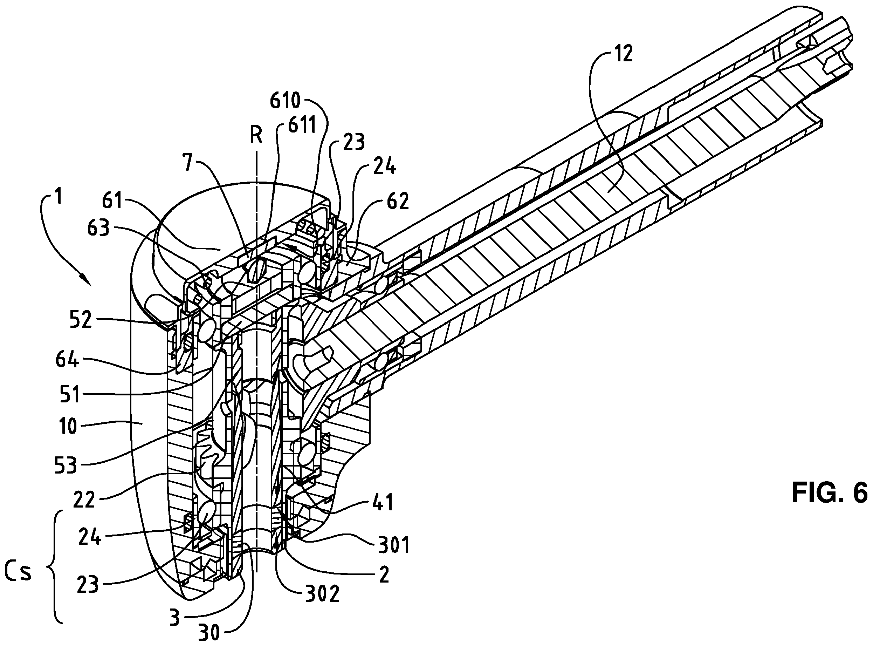

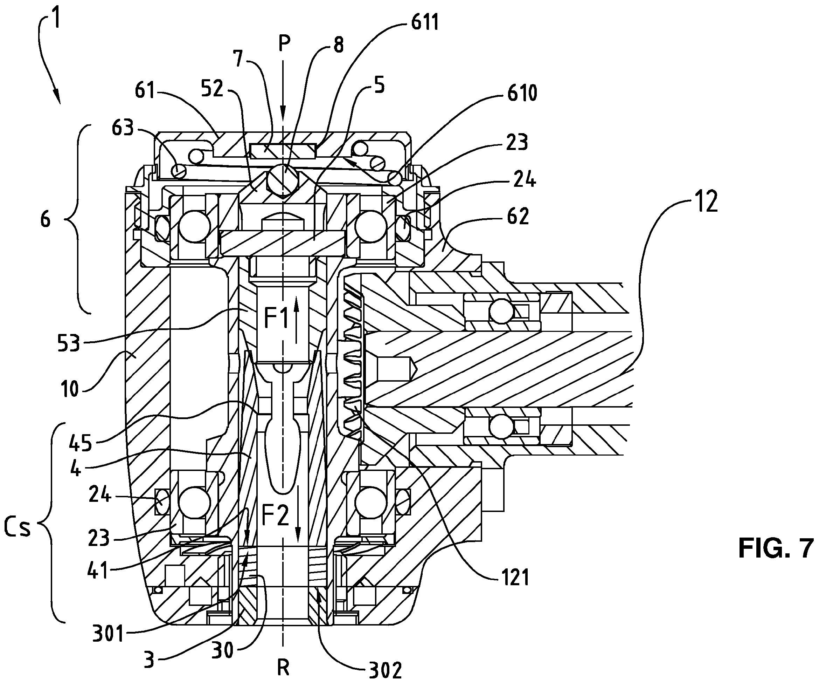

Les flèches S-S de la figure 1 montrent le plan de coupe sagittal sera utilisé sur les figures 2 à 8 suivantes pour permettre de visualiser plus en détail le mécanisme de montage et de serrage de la fraise 100 proposé dans le cadre de la présente invention, tout d'abord dans le cadre d'une turbine (sur les figures 2 à 5) puis dans le cadre d'un contre-angle (figures 6 et 7).

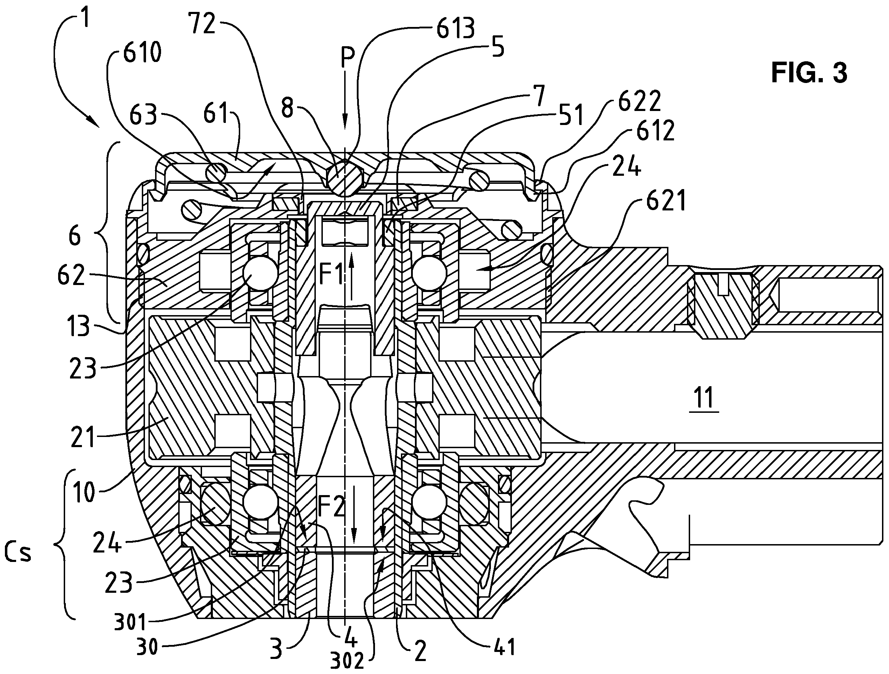

Dans ce qui suit, on décrira tout d'abord un premier mode de réalisation préférentiel lié à une turbine, en lien avec les figures 2 et 3.

La figure 2, qui consiste en une vue en coupe sagittale partielle en trois dimensions d'une pièce-à-main 1 le long du plan de coupe (S-S) indiqué sur la figure 1, permet de distinguer les différents éléments usuels d'une tête 10 et d'un mécanisme de serrage pour la fraise 100 - néanmoins non représentée dans un souci de clarté - comprenant notamment le conduit d'approvisionnement en air comprimé 11 sur la droite de la figure, entraînant la roue de turbine 21, elle-même solidaire en rotation d'un arbre d'entraînement 2 pour l'outil de fraisage 100, auquel on se réfère communément comme étant « l'arbre du rotor ». Sur l'arbre d'entraînement 2 sont ici insérés deux roulements 23, de préférence à billes, eux-mêmes comprimés par des joints de type O-rings 24 respectifs. Dans l'arbre d'entraînement 2 sont montés respectivement la pince 4 de retenue axiale de la fraise - dont les mâchoires ne sont pas visibles sur cette figure, mais mieux visibles sur la figure 7 relative au mode de réalisation correspondant à un contre-angle - et le canon 3 de guidage radial, ces deux pièces étant dissociées pour pouvoir notamment ajuster les matériaux utilisés pour la pince 4 de ceux du canon 3 de guidage. En effet, alors que la pince 4 requiert des matériaux de préférence élastique et déformables, le canon 3 requiert quant à lui de préférence des matériaux très durs, de manière à être inusables et garantir d'excellentes propriétés de guidage le long de l'axe de rotation R le plus longtemps possible.

Dans la partie supérieure de la tête est insérée une pièce de retenue pour le bouton-poussoir 61, qui est prévu pour libérer la fraise 100. Cette pièce de retenue consiste, selon le mode de réalisation préférentiel décrit, en un écrou 62 vissé dans la tête par l'intermédiaire d'un bourrelet fileté 621 au niveau de sa périphérie externe, coopérant avec un taraudage 13 pratiqué dans la tête 10; un joint d'étanchéité 64 est prévu au niveau de la coopération de ces surfaces de vissage afin d'assurer le positionnement répétable de l'écrou et du bouton-poussoir et, dans le cas d'une turbine, de stabiliser ainsi les flux aérodynamiques sortant de la tête. Sur le dessus de l'écrou 62 de retenue est disposé un ressort 63 permettant de ramener le bouton-poussoir 61 sans sa position de repos, telle qu'elle est représenté sur les figures 2 et 3, où une partie d'accrochage périphérique radiale 612 du bouton-poussoir est maintenue en appui contre un bec de retenue périphérique intérieur 622, la coopération de parties d'accrochage étant mise en évidence sur la figure 3.

Sur la figure 2, on peut également distinguer, au niveau de face inférieure 610 du bouton-poussoir 61, une bille 8 anti-chauffe, réalisée dans un matériau à faible conductivité thermique prévu à cet effet, et qui est de préférence chassée directement dans un logement central 613 aménagé dans le bouton-poussoir 61, ici de section hexagonale afin de minimiser les ponts thermiques de transfert de chaleur vers le bouton-poussoir 61.

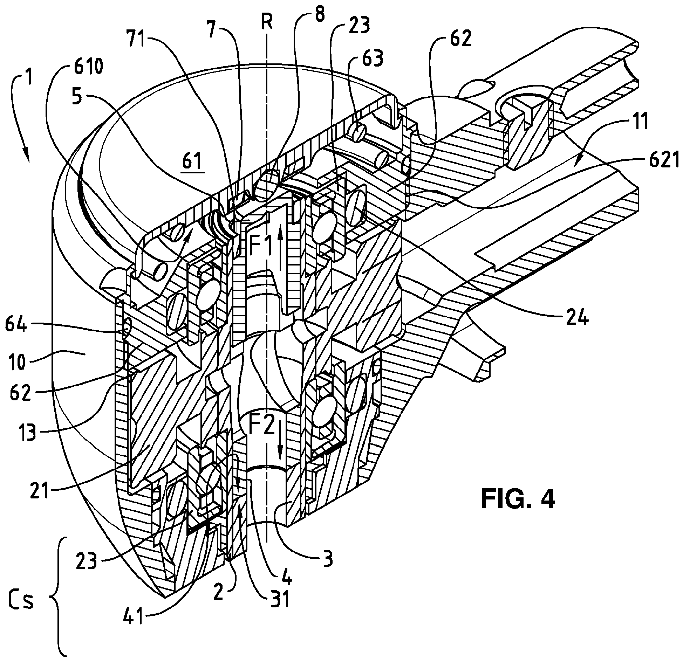

Le module poussoir 6, formé par l'écrou 62 et le bouton-poussoir 61, ainsi que le ressort 63 de compression interposé entre les deux, est illustré plus loin sur la figure 3. Sur la figure 2, on peut néanmoins d'ores et déjà distinguer le poussoir 5, avec lequel le bouton-poussoir 61, ou ici plus exactement la bille 8 peut être amenée à venir en contact, lorsqu'une pression est exercée dans la direction P, visible sur les figures 3 et 4, et un aimant permanent de serrage 7 agencé dans l'écrou 62. Dans le cadre de la présente invention, le poussoir 5 est réalisé dans un matériau ferromagnétique passif, de manière à coopérer avec l'aimant permanent de serrage 7.

Pour une turbine, le rotor de transmission est donc constitué de la roue de turbine 21 en entrée et de l'arbre d'entrainement 2 en sortie, ainsi que des roulements 23, la pince 4, le poussoir 5 et le canon 3.

Pour un contre-angle, le rotor de transmission est constitué d'un pignon d'entrainement 22 (qui remplace la roue de turbine 21) en entrée et de l'arbre d'entrainement 2 en sortie, ainsi que des roulements 23, la pince 4, le poussoir 5 et le canon 3.

La puissance disponible au rotor de transmission, donc le couple et la vitesse de rotation de ce rotor, dépend de la pièce-à-main dans laquelle le rotor est intégré, ainsi que du tuyau et du réseau d'alimentation en air comprimé (dans le cas de la turbine) ou du moteur et de l'électronique de commande du moteur (dans le cas du contre-angle). Le couple transmis à l'arbre d'entrainement 2 dépend aussi de la vitesse de rotation du rotor de transmission, qui dépend du couple appliqué en entrée à l'outil (via l'air comprimé dans le cas de la turbine, ou de la vitesse de rotation imposée au moteur pour le contre-angle); le rendement du rotor de transmission diminue fortement avec l'augmentation de la vitesse (et tend à zéro pour la vitesse maximum, dans le cas d'une turbine). Cependant, dans les deux cas, pour la turbine ou le contre-angle, le couple maximum qui peut être transmis à l'arbre d'entrainement 2 dépend uniquement du composant d'entrée du mécanisme d'entraînement (la roue de turbine 21 ou le pignon d'entrainement 22, respectivement), de la friction et du rendement des roulements 23 et de la liaison mécanique entre ce composant d'entrée et l'arbre d'entraînement 2; le couple transmis ne peut pas dépasser la limite de rupture de cette liaison mécanique.

Par exemple, pour une turbine, le couple maximum qui peut être transmis à l'arbre d'entrainement 2 - indépendamment de la géométrie de la pièce-à-main dans laquelle le rotor est intégré et de la pression d'air disponible - est déterminé par le rendement des roulements 23, le diamètre et la hauteur de la roue de turbine et le nombre et de la forme des aubes de la roue de turbine 21.

Pour un contre-angle, le couple maximum qui peut être transmis à l'arbre d'entrainement 2 - indépendamment de la géométrie de la pièce-à-main dans laquelle le rotor est intégré et de la pression d'air disponible - est déterminé par le rendement des roulements 23, et le nombre, la matière et la forme des dents du pignon d'entrainement 22.

En considérant ces limitations techniques, le couple maximum $C_{Tr}$ qui peut être transmis à l'arbre d'entraînement 2 via l'intermédiaire du rotor de transmission est de l'ordre de 2 à 6mNm si le rotor est intégré dans une turbine alors qu'il peut atteindre généralement 10 mNm si le rotor est intégré dans un contre-angle connecté à un moteur tournant à une vitesse inférieure à 20'000 rpm.

Dans ce qui suit, on se référera indifféremment à la figure 3, reprenant les mêmes éléments que la figure 2 précédemment décrite dans le plan sagittal S-S, et la figure 3, et qui représente les différents éléments du dispositif de serrage perfectionné selon l'invention selon une vue agrandie. La description des références communes à toutes ces figures ne seront pas systématiquement répétée.

Sur les figures 2 et 3, on peut constater qu'un aimant permanent de serrage de forme annulaire 7 est positionné dans l'écrou 62 de retenue du bouton-poussoir 61 à l'aide d'une pièce de retenue 72 possédant une partie cylindrique 721 et une collerette de retenue axiale 722. Cette pièce peut être fixée de n'importe quelle manière à l'écrou 62, par exemple par chassage, soudage, ou encore vissage, et on peut remarquer que le positionnement de l'aimant 7 de forme annulaire dépasse radialement l'enveloppe du poussoir 5, qui possède par ailleurs des épaulements périphériques 50 afin de pouvoir disposer l'arrêt de serrage 51. Cet aimant de serrage 7 est aimanté dans la direction axiale et donc exerce en permanence une force d'attraction dirigée substantiellement vers le haut sur l'élément ferromagnétique partenaire, c'est-à-dire le poussoir 5 du dispositif de serrage. La force d'attraction magnétique $F_1$ est matérialisée par la flèche sur la figure 4 illustrant le fait que le poussoir 5 est maintenu en position haute en direction du bouton-poussoir 61. En conditions d'utilisation, c'est-à-dire pendant la rotation de l'arbre d'entraînement 2 et le fraisage, cette force d'attraction magnétique $F_1$ permet de plaquer le poussoir 5 contre l'arrêt de serrage 51, et empêche ainsi le coincement du poussoir 5 dans la pince 4 et l'ouverture accidentelle de cette dernière.

L'aimant permanent de serrage 7 est, dans le cadre de la présente invention, de préférence de forme annulaire, ou cylindrique, c'est-à-dire présentant une forme de révolution autour de l'axe de rotation R de la fraise.

Selon le mode de réalisation illustré par les figures 2 à 4, le fait que l'aimant permanent de serrage 7 soit positionné dans l'écrou 62 a pour conséquence de rapprocher au maximum ce dernier de son élément ferromagnétique partenaire, c'est-à-dire le poussoir 5, et ainsi de maximiser l'intensité de la force magnétique $F_1$ permettant de le maintenir efficacement dans sa position 'haute', c'est-à-dire où le poussoir est maintenu en contact contre l'arrêt de serrage 51.

Cette implémentation selon laquelle l'aimant permanent de serrage 7 est fixe et situé dans l'écrou 62 de retenue du bouton-poussoir 61 présente par ailleurs un avantage technique additionnel de fiabilité. En effet, lors de l'ouverture du serrage, le bouton poussoir 61 est pressé par l'utilisateur selon la direction P, pour enfoncer le poussoir 5 à l'intérieur de la pince 4 et donc ouvrir les manchons élastiques de la pince 4: dans ce cas, l'utilisateur doit vaincre non seulement la force de tenue du ressort 63 comprimé entre l'écrou 62 et le bouton poussoir 61, mais aussi la force magnétique $F_1$ entre le poussoir 5 et l'aimant permanent de serrage 7, ce qui rajoute une sécurité supplémentaire par rapport au risque de pression accidentelle du bouton-poussoir 61 de la part de l'utilisateur.

Afin d'éviter toute usure prématurée de la pince 4, due à la désolidarisation entre l'outil de fraisage 100 et la pince 4 pendant une rotation sous charge, en raison notamment d'un blocage instantané de la fraise impliquant, à cause de l'inertie non négligeable du rotor, le dépassement du couple maximum assuré par le serrage, un dispositif de couplage angulaire $C_s$ sélectif est proposé dans le cadre de l'invention entre la pince 4, et le canon de guidage 3, formés par deux pièces distinctes assemblées de façon amovible et réversible l'une à l'autre, afin de permettre précisément un décrochage de la pince 4 par rapport au canon de guidage 3 avant que l'outil de fraisage 100 ne soit amené lui-même à tourner dans la pince 4. Une autre contrainte fonctionnelle d'un tel système de montage modulaire de la pince 4 sur le canon 3 consiste à faire en sorte que la pince ne décroche jamais angulairement non plus du canon quel que soit le couple appliqué en entrée à l'arbre d'entraînement. Autrement dit, le mécanisme de couplage angulaire sélectif $C_s$ proposé doit exercer un couple de retenue angulaire C entre la pince 4 et le canon de guidage dont la valeur soit comprise entre celle correspondant au couple maximal de transmission $C_{Tr}$ dudit mécanisme d'entraînement, et celle correspondant au seuil de glissement entre ladite pince 4 et ledit outil de fraisage 100, ce qui peut être résumé par l'inégalité suivante:

$$C_{tr} < C < C_{glis}$$

En pratique, en considérant que le seuil de glissement entre la pince 4 et l'outil de fraisage 100 est de l'ordre de 20 à 30mNm et, comme illustré plus haut, que le couple maximum $C_{Tr}$ fourni à l'arbre d'entraînement 2 via l'intermédiaire du rotor de transmission est de l'ordre de 2 à 6mNm pour une turbine et de l'ordre de 10 mNm pour un contre-angle], le couple de retenue angulaire (C) sera de préférence compris entre 4mNm et 20mNm..

Considérant que le rotor de transmission est généralement un composant de rechange pour les turbines et les contre-angles (il est donc possible de remplacer uniquement le rotor de transmission usé, lors d'une réparation effectuée par un opérateur du service après-vente ou, dans certains cas, directement par l'utilisateur), il est avantageux d'utiliser le même rotor de transmission pour équiper plusieurs modèles et types de turbine ou des modèles de contre-angle ayant un rapport de transmission et/ou un rendement différent. Dans cette situation, lors de la conception du rotor de transmission, uniquement le couple de glissement entre la pince et l'outil de fraisage est connu (grâce au fait que les outils de fraisages sont normalisés), alors que le couple maximum fourni à l'arbre d'entrainement n'est pas précisé. Dans ces cas, en considérant les intervalles de couple définis plus haut, le rotor de transmission et le système de serrage selon l'invention doivent de préférence être dimensionnés en imposant que le couple de retenue angulaire satisfait la relation :

$C_{glis}/2 < C < C_{glis}$. Ce critère de construction permet d'assurer le bon fonctionnement du système de serrage intégré dans un rotor de transmission universel, c'est-à-dire utilisable dans plusieurs modèles de turbine ou de contre-angle.

Sur le mode de réalisation illustré par les figures 2 et 3, le mode de couplage utilisé par le mécanisme de couplage angulaire sélectif $C_s$ est de type magnétique, ce qui permet également non seulement de garantir le couplage mutuel en rotation entre le canon de guidage 3 et la pince 4 de serrage, mais également d'assurer leur positionnement axial sans nécessiter l'ajout d'aucune autre pièce pour réaliser cette dernière fonction. Sur ces figures, on peut constater que le canon de guidage 3 est surmonté d'un aimant permanent de forme annulaire - l'anneau de couplage aimanté 30 - qui peut être chassé et/ou brasé et/ou soudé directement dans l'arbre d'entraînement 2, ou encore brasé et/ou soudé au canon de guidage 3 par le biais de sa surface inférieure de fixation 302, apposée sur l'extrémité axiale du canon de guidage 3. Le canon de guidage 3 est toujours solidaire de l'arbre d'entraînement 2 - par exemple par chassage - tandis que la pince 4 n'est au contraire pas chassée dans l'arbre d'entraînement 2, mais libre de tourner autour de l'axe de rotation R de l'outil de fraisage 100.

Cet anneau de couplage aimanté 30 est aimanté dans la direction axiale et donc exerce en permanence une force d'attraction magnétique $F_2$ dirigée vers le bas sur l'élément ferromagnétique partenaire, qui dans ce cas est constitué par la pince de serrage 4. En plus du couple d'origine magnétique, un couple d'origine mécanique - dû au frottement mécanique entre les pièces au niveau des surfaces de couplage - est exercé par l'aimant sur la pince 4, s'opposant à la rotation de la pince 4 par rapport au canon de guidage 3. Ainsi le couple de retenue angulaire C entre la pince 4 et le canon de guidage 3 résulte au moins partiellement de la friction entre la surface de couplage axial inférieure 41 de la pince 4 et la surface de couplage axial supérieure 31 du canon de guidage 3.

Un avantage de ce mode de réalisation est que le canon de guidage 3 et l'aimant permanent formé par l'anneau de couplage aimanté 30 peuvent être fabriqués dans deux matériaux différents, privilégiant la dureté pour le canon de guidage 3 et la saturation magnétique pour l'aimant: par exemple, le canon de guidage pourrait être en métal dur (CW) non magnétique, et l'aimant en SmCo, qui constitue une matière au contraire non particulièrement dure et fragile.

D'un point de vue fonctionnel, lors du travail de fraisage, le couple de fraisage appliqué à l'outil de fraisage 100 est transmis à la pince 4: dans le cas où l'outil de fraisage 100 est accidentellement bloqué par une aspérité de la matière fraisée, le couple instantané exercé sur la pince 4 augmente considérablement à cause de l'inertie de l'arbre d'entraînement 2, qui n'arrive pas à s'arrêter suffisamment vite lors du choc subi par l'outil de fraisage 100. Dans ce cas, le couple instantané appliqué sur la pince 4 par l'outil de fraisage 100 dépasse le couple de retenue angulaire C exercé par le canon de guidage 3 sur la pince 4, ce qui provoque le glissement de l'ensemble (pince 4 - outil de fraisage 100) par rapport au canon de guidage 3. Le fait que la désolidarisation de l'ensemble (pince 4 - outil de fraisage 100) du canon de guidage 3 intervient avant que l'outil de fraisage 100 ne soit désolidarisé de la pince 4 permet de préserver la pince des phénomènes d'usure causés par le frottement de l'outil de fraisage 100 dans la pince 4.

Une autre propriété importante du système de serrage selon l'invention peut être bien comprise dans ce mode de réalisation: à la suite du phénomène ayant causé la désolidarisation de l'ensemble (pince 4 - outil de fraisage 100) du canon de guidage 3 et/ou de l'arbre d'entrainement 2, le couplage sélectif entre la pince 4 et le canon de guidage 3 et/ou l'arbre d'entrainement 2 est rétabli sans aucune dégradation ou usure, c'est-à-dire que le couple de retenue n'est pas modifié lors de la désolidarisation des composants. En pratique, le nombre de fois où le phénomène de désolidarisation temporaire de l'ensemble (pince 4 - outil de fraisage 100) du canon de guidage 3 et/ou de l'arbre d'entrainement 2 se produit n'a aucun impact négatif sur la durée de vie du système de serrage et du rotor de transmission. Ce phénomène de désolidarisation ne peut même pas être perçu directement par l'utilisateur.

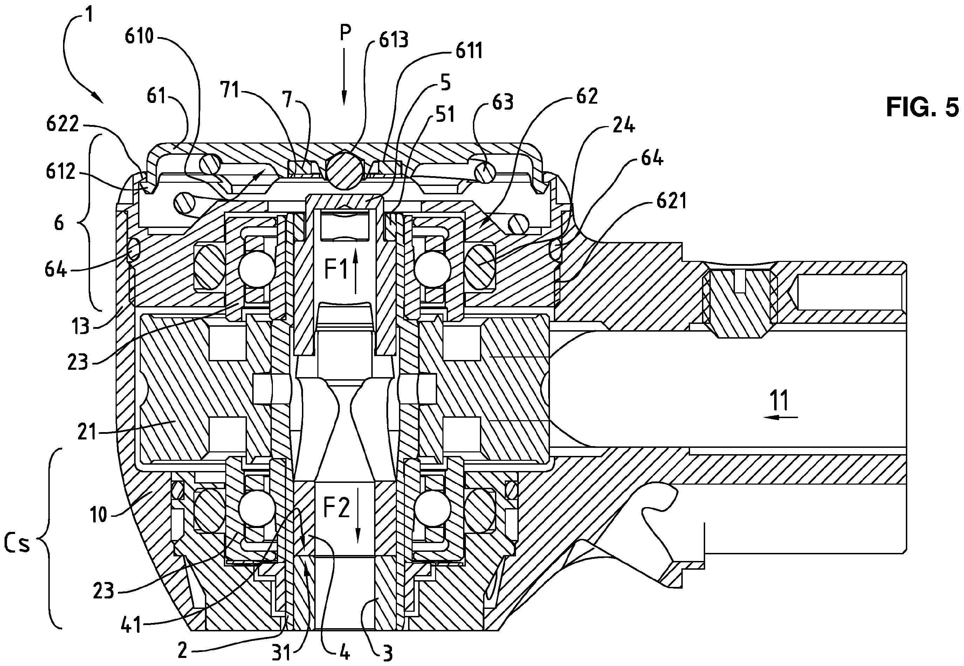

Les figures 4 et 5 illustrent un autre mode de réalisation préférentiel pour la présente invention, toujours relatif à une turbine.

Selon ce mode de réalisation, le dispositif d'entraînement de la fraise 100 est en tout point identique à celui du mode de réalisation décrit précédemment et illustré par les figures 2 et 3; par conséquent, toutes les références introduites dans le cadre de ces figures ne seront pas réexpliquées.

Toutefois, le dispositif de serrage de la fraise 100 présente un agencement différent de l'aimant permanent 7, qui est cette fois non plus intégré dans l'écrou 62, mais directement dans le bouton-poussoir. En effet, comme on peut le constater sur la figure 5, un aimant permanent de serrage 7 de forme annulaire est cette fois agencé autour du logement 613 de la bille 8 anti-chauffe, dans un renfoncement 611 dans la face inférieure 610 du bouton-poussoir 61. Il est maintenu en position à l'intérieur du renfoncement du bouton-poussoir 61 par une rondelle de retenue axiale 71, de préférence soudée ou collée au bouton-poussoir 61. L'élément ferromagnétique partenaire de l'aimant est toujours le poussoir 5, représenté sur les figures 4 et 5 dans la position 'haute', c'est-à-dire maintenu en contact contre l'arrêt de serrage 51 grâce à la force d'attraction magnétique $F_1$ matérialisée par la flèche visible sur la figure 7 et tend à tirer le poussoir 5 vers le haut.

Le mécanisme de fonctionnement est similaire à celui du mode de réalisation précédent en phase de rotation/fraisage, où le poussoir est attiré vers le haut suite à la force d'attraction magnétique $F_1$ exercée par l'aimant. Néanmoins une différence majeure peut être constatée lors de la pression sur le bouton-poussoir 61, illustrée par les flèches P sur la figure 5. En effet, lors d'une telle phase de pression sur le bouton-poussoir 61, l'attraction magnétique va cette fois-ci favoriser la descente du bouton-poussoir 61 en raison de la distance entre l'aimant permanent de serrage 7 qui diminue lorsque le bouton-poussoir se rapproche du poussoir 5. Par conséquent, donc l'intensité de la pression P qui doit être appliquée par l'utilisateur est moindre qu'en absence d'aimant, alors qu'elle était augmentée dans le cas précédent.

Néanmoins, puisque dans le mode de réalisation des figures 4 et 5, l'aimant permanent de serrage 7 se trouve dans une position plus éloignée du poussoir 5 que dans le mode de réalisation des figures 2 et 3, la force d'attraction magnétique $F_1$ exercée sur le poussoir 5 sera inférieure, à égalité de dimensions de l'aimant permanent de serrage 7 et du poussoir 5. Ce dernier mode de réalisation des figures 4 et 5 est par contre plus aisé à réaliser, parce qu'une simple rondelle peut être utilisée pour chemiser l'aimant permanent de serrage. Du reste, afin d'augmenter la force magnétique exercée sur le poussoir 5, il serait possible par ailleurs de réaliser la rondelle de retenue axiale 71 également dans un matériau ferromagnétique, de même que la bille 8 anti-chauffe, par exemple en carbure de tungstène avec une teneur de 30 % en Cobalt.

Dans une variante particulièrement avantageuse des modes de réalisations illustrés sur les figures 2 à 5, l'arrêt de serrage 51 est aussi libre de tourner dans l'arbre d'entraînement 2, comme la pince 4. Autrement dit : cet arrêt de serrage 51 n'est pas chassé et/ou soudé, ce qui permet de supporter des transitoires temporels particulièrement longs pendant lesquels la pince 4 glisse sur le canon de guidage 3 sans le risque que le poussoir 5 puisse forcer l'ouverture de la pince 4 par l'exercice de forces résultant en un couple de torsion sur les mâchoires de serrage. Dans ce cas, l'arrêt de serrage 51 est posé dans l'arbre d'entraînement 2 et le sertissage du pourtour supérieur de l'arbre d'entraînement 2 assure que l'arrêt de serrage 51 ne puisse pas sortir axialement de l'arbre d'entraînement 2.

Selon une variante illustrée par les figures 6 et 7 qui suivent, relatif à un contre-angle, l'aimant permanent de serrage 7 pourrait aussi prendre la forme d'un disque ou d'une pastille positionnée à l'intérieur du bouton-poussoir, mais derrière la bille 8 anti-chauffe. Dans un tel cas, l'épaisseur de l'aimant permanent de serrage 7 pourrait aussi être augmentée de manière considérable pour résulter en une force d'attraction magnétique $F_1$ accrue.

Les figures 6 et 7 mettent en évidence un mode d'entraînement différent de l'arbre du rotor, c'est-à-dire l'arbre d'entraînement 2, par rapport à la turbine des figures 1 à 7 précédentes, cette fois à l'aide d'un engrenage entre l'arbre moteur 12, entraîné par un moteur électrique, et le pignon d'entraînement 22 qui remplace la roue de turbine 21 dans le rotor de transmission. Le poussoir 5 est désormais réalisé en deux parties, avec une partie supérieure 52 du poussoir 5 qui est solidaire en rotation de l'arbre d'entraînement 2, en raison de l'arrêt du poussoir 51 formé par une goupille transversale, et une partie inférieure 53 conique libre en rotation par rapport à l'arbre d'entraînement. L'aimant permanent de serrage 7 formé par la pastille disposée dans le renfoncement 611 de la face inférieure 610 du bouton poussoir 61 est désormais susceptible de venir en contact avec la bille 8 anti-chauffe aménagée cette fois non plus directement dans un logement du bouton-poussoir 61, mais sur la partie supérieure 52 du poussoir 5.

Comme on peut le voir sur la figure 7, qui constitue un agrandissement de la figure 6 dans le plan de coupe sagittal S-S, les mâchoires 45 de la pince 4 retiennent axialement la fraise 100 (non représentée pour des questions de lisibilité des autres pièces) tant que la partie inférieure 53 conique ne vient pas les écarter lorsqu'une pression est exercée sur le bouton-poussoir 61 vers l'intérieur de la tête 10, conformément à la direction de la flèche référencée « P ». Dans un tel cas, l'élément magnétique passif associé à l'aimant permanent de serrage 7 logé dans le renfoncement 611 aménagé sur la face inférieure du bouton-poussoir 61 consiste précisément au moins en la partie inférieure 53 conique, et, en raison de l'éloignement axial de cette pièce par rapport à l'aimant permanent de serrage 7, potentiellement également la partie supérieure du poussoir 5.

Dans le contre-angle illustré par les figures 6 et 7, on peut constater que le mode de réalisation du mécanisme de couplage angulaire sélectif $C_s$ est similaire à celui des figures 2 et 3, impliquant un mode de couplage magnétique et où un anneau de couplage aimanté 30 est interposé entre le canon de guidage 3 et la pince 4. Toutes les références expliquées en détail dans le cadre de la description des figures 2 et 3 ne seront donc pas reprises ici.

Néanmoins, comme expliqué ci-dessus, le poussoir 5 est désormais scindé en deux parties avec une partie supérieure 52 bloquée en rotation par une goupille transversale utilisée comme arrêt de serrage 51, et une partie inférieure conique 53 libre en rotation dans l'arbre d'entraînement 2, ce qui permet également d'éviter de force l'ouverture des mâchoires 45 de la pince 4 par l'exercice d'un couple de torsion, ainsi que de provoquer une usure du poussoir 5 en raison des frottements lorsque la pince 4 serait amenée à tourner dans l'arbre d'entraînement, ce qui, à terme, pourrait générer une légère inclinaison du poussoir 5 et par conséquent son blocage dans le sens axial.

Dans ce qui précède, on a décrit la réalisation de couplages magnétiques pour le mécanisme de couplage angulaire sélectif $C_S$, qui présente les avantages suivants :

- Exploiter des forces sans contact, ce qui réduit ou élimine les effets d'usure;

- Assurer l'efficacité de la solution technique indépendamment des cotes géométriques.

- Minimiser le nombre de composants additionnels à introduire dans la construction de la pièce-à-main.

- Ne pas complexifier les opérations de montage par rapport aux constructions typiques.

Toutefois, dans le cadre de la présente invention, un couplage purement mécanique, c'est-à-dire par friction, peut également être réalisé, notamment via une bague en teflon ou bronze, insérée et chassée dans l'arbre d'entraînement et à l'intérieur de laquelle la pince 4 est chassée avec une faible force de chassage (aussi appelé « chassage gras », ce qui permet d'assurer un relativement faible couple de retenue de la pince).

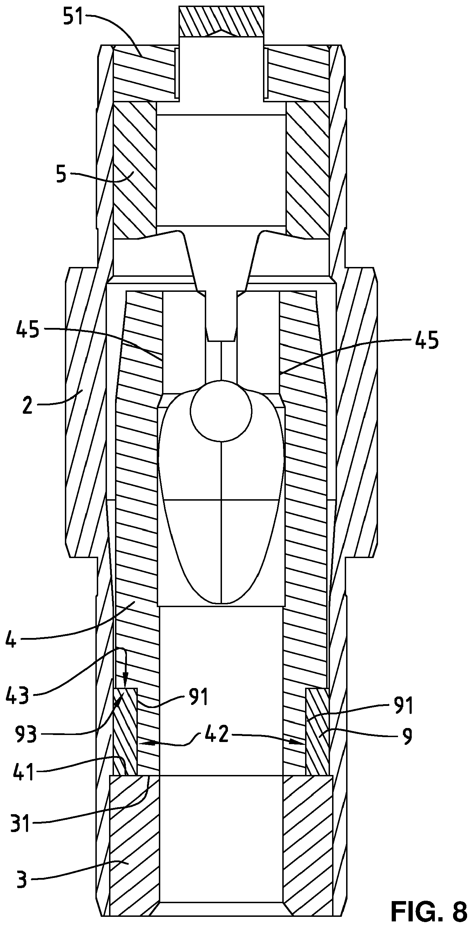

Les figures 8 à 10 montrent différents modes de réalisation préférentiels pour un mécanisme de couplage angulaire sélectif ($C_S$) selon l'invention utilisant un tel mode de couplage, utilisant notamment des surfaces radiales entre la pince 4 et directement l'arbre d'entraînement 2. Pour toutes ces figures, les références communes à toutes les pièces usuelles du dispositif de serrage (notamment l'arbre d'entraînement 2, poussoir 5 et arrêt de serrage 51, canon de guidage 3, pince 4 et ses mâchoires de serrage 45) et les surfaces de couplage entre le canon et la pince ne seront introduites que pour la description de la figure 8 mais pas répétées pour les figures ultérieures.

La figure 8 montre ainsi par exemple un arbre d'entraînement 2 dans lequel est monté un canon de guidage 3 par exemple par chassage ou soudage, et une pince 4 dont les mâchoires de serrage 45 sont susceptibles d'être écartées par un poussoir 5, auquel est monté un arrêt de serrage 51 comme dans les configurations précédemment décrites. Une différence essentielle dans ce mode de couplage par rapport à ceux décrits précédemment est qu'il n'a plus lieu entre le canon de guidage 3 et la pince 4, mais directement entre l'arbre d'entraînement 2 et la pince 4 grâce à la présence de la bague de serrage radial 9 qui est de préférence chassée dans l'arbre d'entraînement 2 ou soudée à ce dernier. Cette bague de serrage radial 9, apposée sur l'extrémité axiale du canon de guidage 3, nécessite une modification de la forme de la pince, qui possède alors un épaulement 43 venant en appui sur la surface supérieure 93 de la bague de serrage radial 9, tandis que la surface interne de couplage radial 92 coopère par friction avec la surface externe de couplage radial 42 de la pince 4. De cette manière, non seulement un couple de retenue angulaire C est assuré entre la bague de serrage radial 9 et la pince 4, mais une force de retenue axiale est parallèlement exercée pour garantir leur solidarisation mutuelle. Dans un souci d'exhaustivité, on notera que des forces de friction sont également exercées au niveau de la surface de couplage supérieure du canon 31 et de la surface de couplage inférieure de la pince 41; néanmoins, au vu du rapport de cette surface avec les surfaces radiales de serrage mentionnées précédemment, la contribution de cette friction pourra être considérée comme négligeable, de même que celle se produisant au niveau du couplage entre la surface supérieure de la bague 93 servant d'appui à l'épaulement inférieur de la pince.

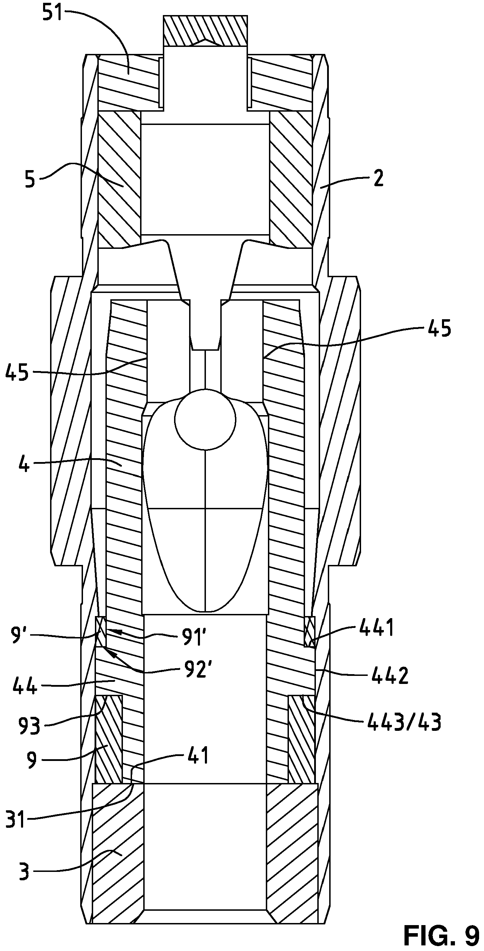

Par conséquent, pour augmenter les surfaces de friction, le mode de réalisation illustré sur la figure 9 propose de rajouter une bague additionnelle de serrage radial 9 au-dessus d'un bourrelet périphérique radial 44 positionné au-dessus de la première bague de serrage radial 9 décrite précédemment; la forme de la surface inférieure 443 de ce bourrelet correspondant à l'épaulement périphérique inférieur de la figure 8, tandis que la surface externe du bourrelet 442 affleure sur l'intérieur de l'arbre d'entraînement 2. Ici encore, le couplage en rotation entre la pince 4 et l'arbre d'entraînement 2 - et donc parallèlement le canon de guidage 3 - est assuré par la coopération par friction entre la surface interne de couplage radial 92 et la surface externe de couplage radial 42 de la pince 4, mais désormais une autre coopération par friction est assurée entre une deuxième surface interne de couplage radial 92' de la bague de serrage radial additionnelle 9', elle aussi solidarisée à l'arbre d'entraînement 2. Selon ce mode de réalisation préféré visant à augmenter les surfaces de friction, on pourra maintenir l'hypothèse que la contribution de la coopération entre la surface de couplage supérieure du canon 31 et de la surface de couplage inférieure de la pince 41 au couple de retenue angulaire C reste toujours négligeable, de même ce que celles des autres surfaces des deux bagues de serrage 9 et 9' employées. Néanmoins, cette solution présente l'avantage d'offrir une butée axiale pour le positionnement de la pince 4 par le biais de la surface inférieure 92' de la bague de serrage radial additionnelle qui se superpose à la surface supérieure 441 du bourrelet périphérique radial 44 ; par ailleurs, une telle variante selon laquelle la pince 4 possédant un épaulement bourrelet périphérique radial 44 interposé entre une première bague de serrage radial 9 et une bague de serrage additionnelle 9' améliore encore le guidage de la pince dans l'arbre d'entraînement 2.

Pour le dispositif de serrage relatif aux modes de réalisation illustré par les figures 8 et 9, le sous-ensemble constitué par ladite pince 2, le canon de guidage 3 et la bague de serrage radiale 9 peuvent être assemblés en dehors de l'arbre d'entrainement (2) et ensuite chassé dans ce dernier, afin de pouvoir tester les propriétés de couplage angulaire de façon modulaire.

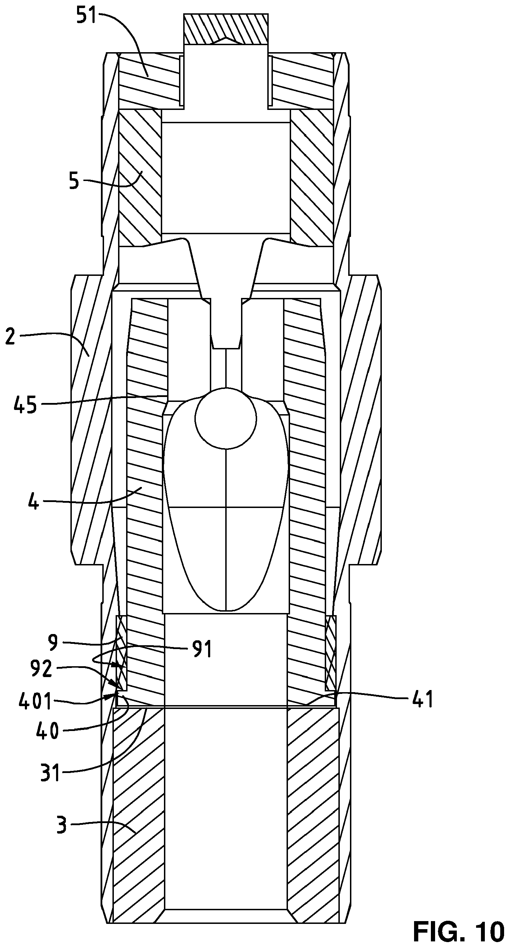

La figure 10 illustre enfin une variante selon laquelle la pince 4 est pourvue d'une collerette inférieure 40 calée sous la bague de serrage radiale 9, dont la surface inférieure 92 agit comme butée axiale en venant appui contre la surface supérieure 401 de la collerette inférieure 40. Toutefois, similairement aux modes de réalisation des figures 8 et 9 précédentes, le couplage en rotation entre la pince 4 et l'arbre d'entraînement 2 est assuré par la coopération par friction entre la surface interne de couplage radial 92 de la bague de serrage radial 9 et la surface externe de couplage radial 42 de la pince 4.

Selon des variantes non illustrées, un ou plusieurs joints de type O-ring pourraient être introduits entre la pince 4 et l'arbre d'entraînement 2 afin de remplacer ou complémenter la bague de serrage radial 9 pour la retenue de la pince 4 selon les besoins.

Similairement, des lamelles élastiques peuvent être introduites (puis chassées ou soudées ou collées) dans l'arbre d'entraînement 2 (à travers des ouvertures précédemment usinées dans l'arbre d'entraînement 2), et être mises en appui sur la surface externe de la pince 4 pour assurer la même fonction de retenue de la pince assurée par la bague de serrage radial 9.

Selon tous les modes de réalisation illustrés ci-dessus relatifs au dispositif de serrage, la pince 4 peut être revêtue, sur la surface extérieure, de DLC, agissant comme revêtement autolubrifiant, ce qui permet de minimiser les frottements et donc améliorer la durée de vie. Par ailleurs, la pince 4 peu avantageusement être fabriquée, lorsqu'elle est réalisée dans un matériau plastique flexible, par impression 3D afin d'optimiser ses propriétés géométriques.

Dans ce qui précède, on a ainsi décrit un mécanisme de couplage angulaire sélectif $C_s$ qui permet:

- Une réduction des mécanismes d'usure de la pince 4 de serrage;

- Une réduction du risque de sortie accidentelle de l'outil de fraisage 100 pendant le travail du dentiste.

- La possibilité d'augmenter le couple et la puissance des pièces-à-main sans réduire leur fiabilité ni la durée de vie.

Bien que l'invention relative à ce nouveau dispositif de serrage amélioré avec mécanisme de couplage angulaire sélectif $C_s$ entre la pince 4 et le canon de guidage 3, ait été décrite en lien avec des modes de réalisation distincts illustrés par les ensembles de figures qui précèdent, on comprendra qu'une combinaison notamment des modes de réalisation préférentiels relatifs aux modes de couplage entre le canon de guidage 3 ou respectivement l'arbre d'entraînement et la pince 4, à savoir magnétique et respectivement mécanique, pourrait être combinée, et que l'intégration des dispositifs de serrage peut indifféremment être réalisée dans une turbine ou un contre-angle selon les besoins.

## Revendications

1. Rotor de transmission pour pièce-à-main (1) destinée à des applications dentaires ou chirurgicales, comprenant un mécanisme d'entraînement en rotation d'un outil de fraisage (100) comportant des roulements (23), une turbine (21) ou un pignon d'entraînement (12) en entrée, et un arbre d'entraînement (2) rotatif autour d'un axe de rotation (R) en sortie, ledit arbre d'entraînement (2) étant adapté pour actionner en rotation ledit outil de fraisage (100) autour dudit axe de rotation (R), ainsi qu'un dispositif de serrage d'un outil de fraisage (100),

   ledit dispositif de serrage comprenant une pince (4) de serrage disposée à l'intérieur dudit arbre d'entraînement (2) pour le maintien axial dudit outil de fraisage (100) par rapport audit axe de rotation (R), ladite pince (4) coopérant avec un poussoir (5) pour la libération dudit outil de fraisage (100), ainsi qu'un canon de guidage (3) radial dudit outil de fraisage, solidaire en rotation avec ledit arbre d'entraînement (2),
   **caractérisé en ce que** ledit dispositif de serrage comprend un mécanisme de couplage angulaire sélectif ($C_s$) entre ladite pince (4) et ledit canon de guidage (3) et/ou ledit arbre d'entraînement (2), ledit mécanisme de couplage angulaire sélectif ($C_s$) exerçant un couple de retenue angulaire (C) entre ladite pince (4) et ledit canon de guidage (3) et/ou ledit arbre d'entraînement (2) dont la valeur est comprise entre 4mNm et 20mNm, laquelle étant adaptée pour être inférieure au seuil de glissement entre ladite pince (4) et ledit outil de fraisage (100).

2. Rotor de transmission pour pièce-à-main selon la revendication 1, caractérisé en que ledit mécanisme de couplage angulaire sélectif ($C_s$) entre ladite pince

(4) et ledit canon de guidage (3) et/ou ledit arbre d'entraînement (2) utilise un couplage magnétique entre ladite pince (4) et ledit canon de guidage (3) solidaire en rotation avec l'arbre d'entrainement (2).

3. Rotor de transmission pour pièce-à-main selon la revendication 2, ladite pince (4) étant réalisée dans un matériau ferromagnétique passif et ledit canon de guidage (3) consistant en un aimant permanent.

4. Rotor de transmission pour pièce-à-main selon la revendication 3, le couple de retenue angulaire (C) entre ladite pince (4) et ledit canon de guidage (3) et résultant par ailleurs de la friction entre la surface de couplage axial inférieure (41) de ladite pince (4) et la surface de couplage axial supérieure (31) dudit canon de guidage (3).

5. Rotor de transmission pour pièce-à-main selon la revendication 2, ladite pince (4) étant réalisée dans un matériau ferromagnétique passif, et ledit canon de guidage (3) étant surmonté d'un anneau de couplage aimanté (30).

6. Rotor de transmission pour pièce-à-main selon la revendication 5, le couple de retenue angulaire (C) entre ladite pince (4) et ledit canon de guidage (3) et/ou l'arbre d'entrainement (2) résultant par ailleurs de la friction entre la surface de couplage axial inférieure (41) de ladite pince (4) et la surface de couplage axial supérieure (301) dudit anneau de couplage aimanté (30).

7. Rotor de transmission pour pièce-à-main selon l'une des revendications précédentes, caractérisé en que ledit mécanisme de couplage angulaire sélectif ($C_s$) entre ladite pince (4) et ledit canon de guidage (3) et/ou ledit arbre d'entraînement (2) utilise un couplage par friction entre une bague de serrage radial (9) montée sur ledit arbre d'entraînement (2) et ladite pince (4), une surface inférieure de couplage radial (91) de ladite bague (9) étant en contact avec une surface externe de couplage radial (42) de ladite pince (4).

8. Rotor de transmission pour pièce-à-main selon la revendication 7, caractérisé en que ladite pince (4) possède une collerette inférieure (40) à sa base possédant une surface périphérique supérieure (401) de butée axiale disposée sous la surface inférieure de retenue axiale (92) de ladite bague de serrage radial (9).

9. Rotor de transmission pour pièce-à-main selon la revendication 7, ladite pince (4) possédant un épaulement bourrelet périphérique radial (44) interposé entre ladite bague de serrage radial (9) et une bague de serrage additionnelle (9').

10. Rotor de transmission pour pièce-à-main selon l'une des revendications précédentes, ledit poussoir (5) étant pourvu d'un épaulement périphérique radial (50), et étant surmonté d'un arrêt de serrage (51) monté libre en rotation dans l'arbre d'entraînement (2).

11. Rotor de transmission pour pièce-à-main selon l'une des revendications précédentes, ledit poussoir (5) étant par ailleurs formé d'une partie supérieure (52) solidaire en rotation dudit arbre d'entraînement (2), et d'une partie inférieure (53) conique coopérant avec ladite pince (4) libre en rotation à l'intérieur dudit arbre d'entraînement (2).

12. Rotor de transmission pour pièce-à-main selon l'une des revendications précédentes, la dite pince (4) étant revêtue, sur la surface extérieure, d'un revêtement autolubrifiant comme le DLC.

13. Rotor de transmission pour pièce-à-main selon l'une des revendications précédentes, ladite pince (4) étant fabriquée en matériau plastique par impression 3D.

**Patentansprüche**

1. Übertragungsrotor für ein Handstück (1) für zahnärztliche oder chirurgische Anwendungen, umfassend einen Antriebsmechanismus für ein Bohrwerkzeug (12), enthaltend Lager (23), eine Turbine (21) oder ein Antriebsritzel (12) als Eingangselement und eine Antriebswelle (2) als Ausgangselement, welche um eine Drehachse (R) drehbar ist, wobei die Antriebswelle (2) eingerichtet ist, um das Bohrwerkzeug (100) in Drehung um die Drehachse (R) zu versetzen, und ferner umfassend eine Klemmvorrichtung für ein Bohrwerkzeug (100),

    wobei die Klemmvorrichtung eine Klemme (4) umfasst, welche innerhalb der Antriebswelle (2) angeordnet ist, um das Bohrwerkzeug (100) axial in Bezug auf die Drehachse (R) zu sichern, wobei die Klemme (4) mit einem Schieber (5) zum Lösen des Bohrwerkzeugs (100) zusammenwirkt, sowie eine radiale Führungsbuchse (3) des Bohrwerkzeugs (3), die drehfest mit der Antriebswelle (2) verbunden ist,
    **dadurch gekennzeichnet, dass** die Klemmvorrichtung einen selektiven Winkelkupplungsmechanismus ($C_s$) zwischen der Klemme (4) und der Führungsbuchse (3) und/oder der Antriebswelle (2) umfasst, wobei der selektive Winkelkupplungsmechanismus ($C_s$) ein Winkelrückhaltedrehmoment (C) zwischen der Klemme (4) und der Führungsbuchse (3) und/oder der Antriebswelle (2) ausübt, dessen Wert zwischen 4mNm und 20mNm liegt, und derart angeordnet ist, um kleiner ist als die Schlupfschwelle zwischen der Klemme (4) und dem Bohrwerkzeug (100) zu sein.

2. Übertragungsrotor für ein Handstück nach Anspruch 1, **dadurch gekennzeichnet, dass** der selektive Winkelkupplungsmechanismus ($C_s$) zwischen der Klemme (4) und der Führungsbuchse (3) und/oder der Antriebswelle (2) eine magnetische Kupplung zwischen der Klemme (4) und der Führungsbuchse (3) verwendet, welche drehfest mit der Antriebswelle (2) ist.

3. Übertragungsrotor für ein Handstück nach Anspruch 2, wobei die Klemme (4) aus einem passiven ferromagnetischen Material gefertigt ist und die Führungsbuchse (3) aus einem Permanentmagneten besteht.

4. Übertragungsrotor für ein Handstück nach Anspruch 3, wobei das Winkelhaltedrehmoment (C) zwischen der Klemme (4) und der Führungsbuchse (3) ferner aus der Reibung zwischen der unteren axialen Kupplungsfläche (41) der Klemme (4) und der oberen axialen Kupplungsfläche (31) der Führungsbuchse (3) resultiert.

5. Übertragungsrotor für ein Handstück nach Anspruch 3, wobei die Klemme (4) aus einem passiven ferromagnetischen Material gefertigt ist und die Führungsbuchse (3) von einem magnetischen Kupplungsring (30) überragt wird.

6. Übertragungsrotor für ein Handstück nach Anspruch 5, wobei das Winkelhaltedrehmoment (C) zwischen der Klemme (4) und der Führungsbuchse (3) und/oder der Antriebswelle (2) darüber hinaus aus der Reibung zwischen der unteren Kupplungsfläche (41) der Klemme (4) und der oberen Kupplungsfläche (301) des magnetischen Kupplungsrings (30) resultiert.

7. Übertragungsrotor für ein Handstück nach einem der vorhergehenden Ansprüche, **dadurch gekennzeichnet, dass** der selektive Winkelkupplungsmechanismus ($C_s$) zwischen der Klemme (4) und der Führungsbuchse (3) und/oder der Antriebswelle (2) eine Reibungskupplung zwischen einem radialen Klemmring (9), der an der Antriebswelle (2) befestigt ist, und der Klemme (4) nutzt, wobei eine untere radiale Kupplungsfläche (91) des Klemmrings (9) in Kontakt mit einer äusseren radialen Kupplungsfläche (42) der Klemme (4) steht.

8. Übertragungsrotor für ein Handstück nach Anspruch 7, **dadurch gekennzeichnet, dass** die Klemme (4) an ihrer Basis einen unteren Kragen (40) aufweist, welcher eine obere periphere axiale Anlagefläche (401) aufweist, die unterhalb der unteren axialen Haltefläche (92) des radialen Klemmrings (9) angeordnet ist.

9. Übertragungsrotor für ein Handstück nach Anspruch 7, wobei die Klemme (4) eine periphere, radiale, mit einem Rand versehene Schulter (44) aufweist, welche zwischen dem radialen Klemmring (9) und einem zusätzlichen Klemmring (9') angeordnet ist.

10. Übertragungsrotor für ein Handstück nach einem der vorhergehenden Ansprüche, wobei der Schieber (5) mit einer radialen Umfangsschulter (50) versehen ist und von einem Klemmanschlag (51) überragt wird, der frei drehbar in der Antriebswelle (2) montiert ist.

11. Übertragungsrotor für ein Handstück nach einem der vorhergehenden Ansprüche, wobei der Schieber (5) ferner einen oberen Abschnitt (52), der drehfest mit der Antriebswelle (2) ist, und einen unteren Abschnitt (53) umfasst, welcher mit der Klemme (4) zusammenwirkt und frei drehbar innerhalb der Antriebswelle (2) ist.

12. Übertragungsrotor für ein Handstück nach einem der vorhergehenden Ansprüche, wobei die Klemme (4) an der Aussenfläche mit einer selbstschmierenden Beschichtung wie DLC beschichtet ist.

13. Übertragungsrotor für ein Handstück nach einem der vorhergehenden Ansprüche, wobei die Klemme (4) aus einem Kunststoffmaterial unter Verwendung von 3D-Druck gefertigt ist.

## Claims

1. Transmission rotor for a handpiece (1) intended for dental or surgical applications, comprising a drive mechanism of a drilling tool (100) including bearings (23), a turbine (21) or a drive pinion (12) as input element, and a drive shaft (2) rotatable about an axis of rotation (R) as output element, wherein said drive shaft (2) is adapted for actuating in rotation said drilling tool (100) around said rotation axis (R), and further including a clamping device of a drilling tool (100),

the said clamping device comprising a clamp (4) disposed inside the said drive shaft (2) for axially securing the said drilling tool (100) with respect to the said axis of rotation (R), the said clamp (4) co-operating with a plunger (5) for release of the said drilling tool (100), as well as a radial guide bush (3) of the said drilling tool, rotating integrally with said drive shaft (2),
**characterized in that** the said clamping device comprises a selective angular coupling mechanism ($C_s$) between the said clamp (4) and the said guide bush (3) and/or said drive shaft (2), the said selective angular coupling mechanism ($C_s$) exerting an angular holding torque (C) between the said clamp (4) and the said guide bush (3) and/or said drive shaft (2), whose value is between 4mNm and 20mNm, which being inferior to that corresponding to the slip threshold between the said clamp (4) and the said drilling tool (100).

2. Transmission rotor for a handpiece according to claim 1, **characterized in that** the said selective angular coupling mechanism ($C_s$) between the said clamp (4) and the said guide bush (3) and/or said drive shaft (2) uses magnetic coupling between the said clamp (4) and the said guide bush (3), which is integral in rotation with the drive shaft (2).

3. Transmission rotor for a handpiece according to claim 2, the said clamp (4) being made of a passive ferromagnetic material and the said guide bush (3) consisting of a permanent magnet.

4. Transmission rotor for a handpiece according to claim 3, the angular holding torque (C) between the said clamp (4) and the said guide bush (3) resulting moreover from the friction between the lower axial coupling surface (41) of the said clamp (4) and the upper axial coupling surface (31) of the said guide bush (3).

5. Transmission rotor for a handpiece according to claim 3, the said clamp (4) being made of a passive ferromagnetic material, and the said guide bush (3) being surmounted by a magnetized coupling ring (30).

6. Transmission rotor for a handpiece according to claim 5, the angular holding torque (C) between the said clamp (4) and the said guide bush (3) and/or the drive shaft (2) resulting moreover from the friction between the lower axial coupling surface (41) of the said clamp (4) and the upper axial coupling surface (301) of the said magnetized coupling ring (30).

7. Transmission rotor for a handpiece according to one of the preceding claims, **characterized in that** the said selective angular coupling mechanism ($C_s$) between the said clamp (4) and the said guide bush (3) and/or said drive shaft (2) uses friction coupling between a radial clamping ring (9) mounted on the said drive shaft (2) and said clamp (4), a lower radial coupling surface (91) of said clamping ring (9) being in contact with an outer radial coupling surface (42) of the said clamp (4).

8. Transmission rotor for a handpiece according to claim 7, **characterized in that** the said clamp (4) has a lower collar (40) at its base having an upper peripheral axial stop surface (401) disposed below the lower axial retaining surface (92) of the said radial clamping ring (9).

9. Transmission rotor for a handpiece according to claim 7, the said clamp (4) having a peripheral radial beaded shoulder (44) interposed between the said radial clamping ring (9) and an additional clamping ring (9').

10. Transmission rotor for a handpiece according to one of the preceding claims, the said plunger (5) being provided with a radial peripheral shoulder (50), and being surmounted by a clamping stop (51) mounted in a way free in rotation in the drive shaft (2).

11. Transmission rotor for a handpiece according to one of the preceding claims, the said plunger (5) being moreover composed of an upper part (52), integral in rotation of the said drive shaft (2), and of a lower conical part (53) co-operating with the said clamp (4) free in rotation inside the said drive shaft (2).

12. Transmission rotor for a handpiece according to one of the preceding claims, the said clamp (4) being covered, on the outer surface, by a self-lubricating coating such as DLC.

13. Transmission rotor for a handpiece according to one of the preceding claims, the said clamp (4) being made of plastic material using 3D printing.

**FIG. 1**

**FIG. 2**

**FIG. 3**

EP 3 946 138 B1

FIG. 4

FIG. 5

EP 3 946 138 B1

**FIG. 6**

EP 3 946 138 B1

**FIG. 7**

**FIG. 8**

**FIG. 9**

**FIG. 10**

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- EP 0273259 B1
- US 2014154642 A
- EP 1716817 A
- FR 2557220 A1
- DE 4324493 A1